Europäisches Patentamt

European Patent Office

Office européen des brevets

(19)

(11) Publication number: **0 046 087**
**B1**

(12) **EUROPEAN PATENT SPECIFICATION**

(45) Date of publication of patent specification: **02.04.86**

(51) Int. Cl.⁴: **G 01 N 35/00**

(21) Application number: **81303658.9**

(22) Date of filing: **11.08.81**

(54) **Method and apparatus for chemical analysis.**

| | |
|---|---|
| (30) Priority: **11.08.80 US 177050** | (73) Proprietor: **EASTMAN KODAK COMPANY**<br>**343 State Street**<br>**Rochester New York 14650 (US)** |
| (43) Date of publication of application:<br>**17.02.82 Bulletin 82/07** | (72) Inventor: **Jessop, Thomas Clifton**<br>**Kodak Park**<br>**Rochester New York (US)** |
| (45) Publication of the grant of the patent:<br>**02.04.86 Bulletin 86/14** | |
| (84) Designated Contracting States:<br>**BE CH DE FR GB IT LI SE** | (74) Representative: **Baron, Paul Alexander Clifford et al**<br>**Kodak Limited Patent Department Headstone Drive**<br>**Harrow Middlesex HA1 4TY (GB)** |
| (56) References cited:<br>**EP-A-0 007 173**<br>**FR-A-2 357 881**<br>**FR-A-2 374 630**<br>**US-A-4 152 390** | |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a method and apparatus for the chemical analysis of substances, known as analytes, in liquids.

Numerous radiometric analyzers of blood have been disclosed, which involve apparatus designed to provide automated handling of blood samples and test elements. Such handling usually includes the metering of blood samples onto the test elements, incubation, and detection of the resulting radiometric changes in the elements. Such analyzers which use test elements in the analysis of blood samples are shown in US—A—4152390, FR—A—2357881 and FR—A—2374630. The last of these three depicts a particularly preferred method of analysis of test elements when rapid through-put is desired, wherein the elements are individually and separately mounted in a rotating incubator.

To obtain a productive throughput, it is desirable that analyzers accommodate a backlog, or accumulation, of test elements which is usually stored in the incubator until a reading is taken of the elements after being removed from the incubator. Incubators used in high-throughput analyzers include movable conveyors for storing the test elements and complex equipment for driving the conveyor and for transferring test elements between the conveyor and other analyzer components. In order that test elements can be loaded in any position that becomes available in the incubator, each element's location in the conveyor must be "remembered", entailing computer tracking of the element for proper retrieval of the element and reloading of the incubator. Since the load station is generally fixed relative to the incubator, access to the incubator is limited to those instances when an empty position in the conveyor appears at the load station. Although all these aspects of the incubator are well within the skill of the art (see e.g. the apparatus according to FR—A—2357881), they increase the cost and complexity of the incubator, and weigh against on-site analysis, for example, at the physician's office.

A further difficulty occurs in the incubation of test elements because certain test chemistries produce gases which, if carried over from one test to the next, would cause erroneous readings. For example, test elements that quantify level of blood urea nitrogen (BUN) usually produce ammonia. Examples of such test elements are described in US—A—4066403. Ammonia, which is intended to create a colour change internally in a test element, can escape in some instances and be carried as a contaminant to another test element in an incubator. Further, escaping gas represents analyte that will not be detected. Prior to this invention, the problem of contamination from escaping gas has been dealt with through the use of test element covers and incubator materials that absorb little of the gas in question.

It is an object of the present invention to overcome the aforementioned problems of prior-art devices by providing for the detection of analytes in liquids in which test elements bearing the liquids are both processed without the use of complex equipment and control devices, and in a manner to control the escape of gas from the test elements.

In accordance with the present invention there is provided a method of detecting analytes of sample liquids by the generation of detectable responses in test elements each of which contain a sample-containing portion, the method comprising the steps of metering a predetermined quantity of liquid onto the sample-containing portion in each of said elements, incubating the elements while in a stacked configuration wherein each successive element is in contact with the element that precedes it so that such successive element covers the sample-containing portion of the preceding element in a manner sufficient to trap and confine to that preceding element any evolving gas from such preceding test element, detecting the responses of each of said elements in the same sequence as they are placed in said configuration either before or after said detecting step.

In accordance with the present invention there is also provided apparatus for detecting analytes of sample liquids by the generation of detectable response in test elements each of which contains a sample-containing portion, the apparatus comprising an incubator which is arranged to receive a plurality of said test elements, each of which has received a predetermined metered quantity of liquid onto the sample-containing portion thereof, and contain such elements in a stacked configuration wherein each successive element is in contact with the element that precedes it so that such successive element covers the sample-containing portion of the preceding element in a manner sufficient to trap and confine to that preceding element any evolving gas from such preceding element, means for detecting the responses of each of said elements in the same sequence as they are placed in said configuration, and means for removing said elements from said configuration either before or after said detecting step.

One advantage of the analyzer of the present invention is that the analyzer is provided with a high through-put, "time-independent access" incubator that does not require complex motors and controls. Preferably this is achieved by eliminating the conveyor within the incubator. A related advantage of the invention is that the analyzer is provided with an incubator that avoids the necessity for sophisiticated addressing systems to recall the patent identity associated with each of several incubator locations. Another advantage of the invention is that the test elements are arranged in the incubator such that the elements themselves function to prevent the escape of gas, which could cause contamination from one element to another.

Embodiments of the present invention will now be described, by way of example, with reference to the accompanying drawings, in which:

Fig. 1 is a fragmentary perspective view of an analyzer constructed in accordance with the present invention, with certain parts broken away and other parts shown schematically;

Fig. 2 is a fragmentary perspective view of an assembled analyzer;

Fig. 3 is a fragmentary sectional view of the incubator of the analyzer, looking toward the ejector element;

Fig. 4 is an elevational view of the analyzer in which the metering station has been removed for clarity, with parts shown in section;

Fig. 5 is a plan view of the analyzer;

Fig. 6 is a fragmentary perspective view of a portion of the loading means;

Fig. 7 is an elevational view of the ejector element of the unloading means, with parts of the element shown in section;

Fig. 8 is a sectional view, taken generally along the line 8—8 of Fig. 7;

Fig. 9 is a perspective view of the ejector element; and

Fig. 10 is a sectional view similar to that of Fig. 3, but illustrating an alternative embodiment of the incubator.

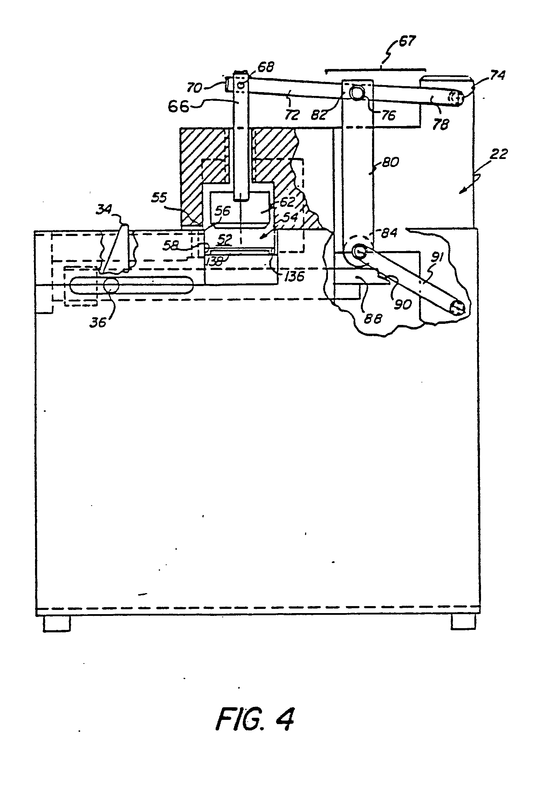

The apparatus of this invention is capable of measuring a variety of analytes of liquids, particularly those of biological liquids. This is accomplished through the use of a generally flat test element E that has a first major surface that includes a sample-containing portion 14 mounted in a plastic frame member 15. Portion 14 in turn comprises one or more absorbent layers 17 on a transparent support 14'. The top surface of layers 17 is exposed to receive a quantity of liquid, such as a drop shown in dotted outline (Fig. 3). Opposite to the layers of portion 14 are the support surfaces of the element E, including a support surface 16 of frame member 15, and a support surface 19 of support 14' exposed through a window 18 of frame member 15.

In an alternative embodiment of the test element (not shown), support surfaces comparable to surfaces 16 and 19 form one continuous surface.

The structure of layers 17 permits them to contain liquid that isdeposited thereon. Layers 17 preferably are constructed in the manner described in US—A—3,992,158 and US—A—4,066,403. Deposited liquid spreads into the layers where a reaction occurs which generates a detectable change.

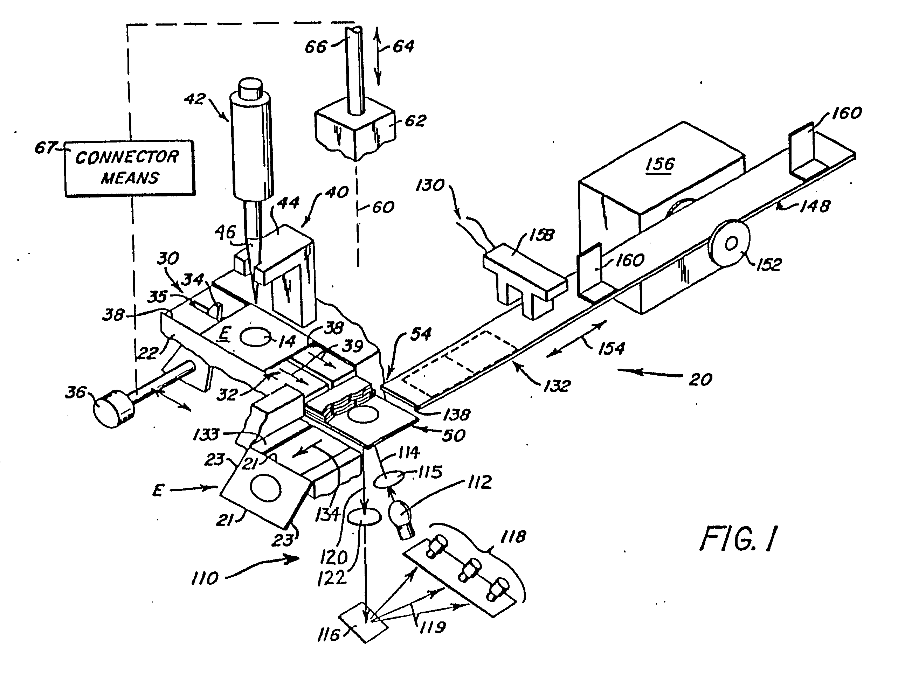

Side edges 21 and 23 (Fig. 1) define the width and length, respectively, of the elements E. Such dimensions are subject to variation, as desired. The thickness of the various layers of elements E has been exaggerated for clarity in Fig. 3. In practice, the total thickness of element E is only about 1 mm.

US—A—4,169,751, discloses a fully comparable and useful test element wherein a sample containing portion is staked to a support frame which is apertured to allow a liquid drop to permeate into the sample containing portion.

Elements E are preferably processed by spotting with a drop of the liquid under analysis, incubating the element E to develop a detectable response that is proportional to the concentration of the analyte under study, and detecting the response. In a preferred form, the response is detected by reflective scanning of the element through window 18 and the transparent support 14'.

Thus, the detection is preferably accomplished radiometrically, but any form of detection is possible in using the present invention, including potentiometric detection, provided that the detecting means, hereinafter described in detail, is suitably modified. As used herein, "radiometric" and its derivatives are understood to include colorimetric as well as fluorimetric forms of detection.

The embodiments hereinafter described refer to blood serum as the preferred liquid under analysis. In addition, other analyte-containing liquids can be so analyzed, including industrial liquids containing non-biological analytes.

Descriptive terms such as "above", "below", "downward", "bottommost" and the like as used herein refer to orientations during use of the analyzer. The term "time-independent access" as applied to the disclosed incubator refers to its flexibility in accepting another test element at any time, rather than only when the next available one of several discrete incubator positions is aligned with a means for loading the incubator.

Referring to Figs. 1—3, and Fig. 1 in particular, an analyzer 20 constructed in accordance with the invention, comprises a frame 22, a test element loading means 30, a metering station 40, an incubator 50, a radiometer 110 as the detecting means, and test element unloading means 130. Loading means 30 comprises a platform 32, a pusher finger 34 that projects up through a slot 35 in the platform 32, and a handle 36 on which finger 34 is mounted. Platform 32 is preferably provided with conventional electrical heating elements (not shown) and is disposed between shoulders 38 that, in cooperation with finger 34, guide test elements E as they are moved toward incubator 50, that is in the direction of arrows 39.

Metering station 40 can incorporate any metering device for depositing a drop of liquid onto element E as it rests on platform 32. A preferred device is a pipette 42 mounted in a holder 44 so that a tip 46 of the pipette is disposed closely adjacent and directly above portion 14 of a test element E. Preferably, tip 46 is disposable to prevent carry-over from one liquid to the next.

Alternatively, station 40 can be omitted and the liquid added to the elements by any other instrument, not shown, prior to being placed on platform 32.

In accordance with one aspect of the invention, an analyzer 20 is provided with an incubator 50 having walls 52 (Fig. 3) that define a generally elongated chamber 54. To permit test elements E to be introduced into chamber 54 at a first location 56, the wall 52 adjacent platform 32 is provided with an access aperture 55 (Figs. 3 and 4). Chamber 54 also includes an element-reading location 58. Within the chamber 54, the elements E follow a path, the direction of which is designated by arrows 57, from location 56 to location 58, along longitudinal axis 60 of the chamber 54. Walls 52 preferably are shaped to form a guide means, or a rectangular chute, which will accommodate the test elements E in a sliding fit, with element portions 14 and 15 extending generally transverse to axis 60. Therefore, each successive test element E placed in chamber 54 necessarily contacts the element E that preceded it such that its support surface 19 covers the sample-containing portion 14 of the preceding element E. More specifically, the length of the chamber 54 between locations 58 and 56 will accommodate a continuous train of "n" elements, n being equal to three in the embodiment shown in Fig. 3. The element E at location 58 is, of course, the first element of the train to have been inserted into chamber 54 by loading means 30, and the element E closest to location 56 is the last element to have been inserted; portion 14 of this last element E is not covered by an adjacent test element.

Preferably, chamber 54 is disposed vertically, whereby the configuration of the incubated elements E is that of a contiguous vertical stack. Gravity is usually sufficient in such an embodiment to move the elements E from location 56 to location 58. Also, preferably, incubator 50 is stationary with respect to the other non-moving parts of the analyzer.

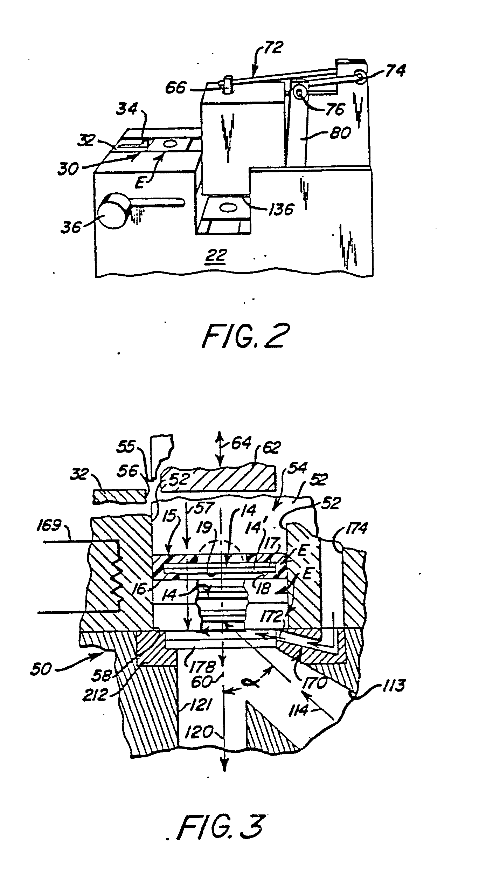

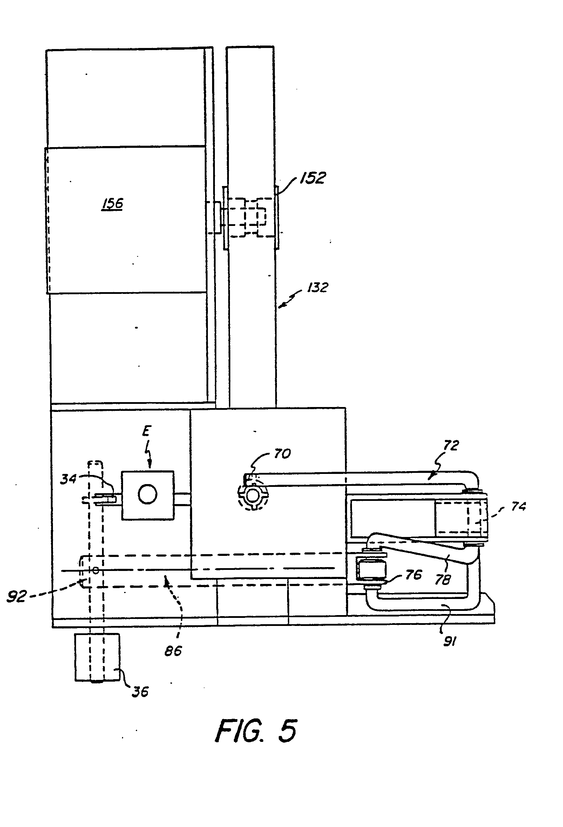

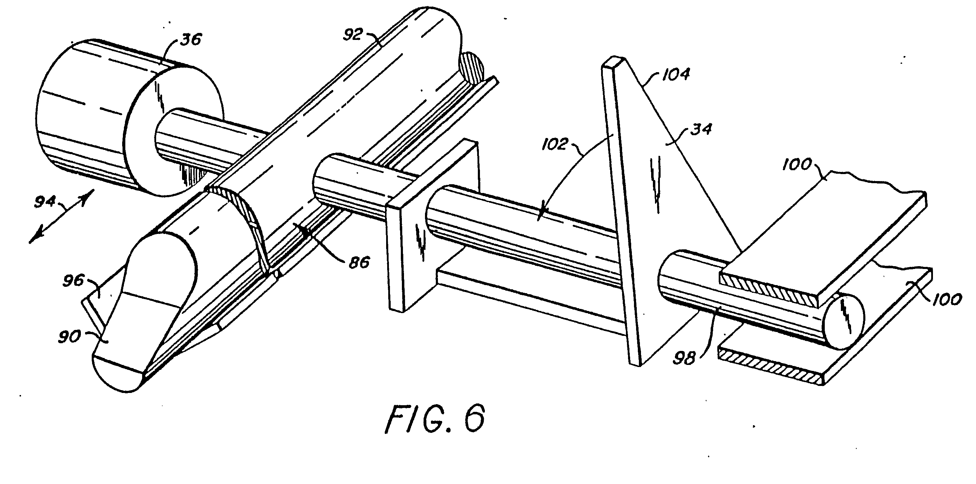

A cover 62 is preferably provided for incubator 50 which can rest against the uppermost element E therein, since portion 14 of the uppermost element E is not otherwise covered. Because the cover 62 has to be withdrawn, if and when an additional element E is added to chamber 54, the cover 62 is mounted to reciprocate within chamber 54, in the direction of arrows 64, from a position above location 56 to a position in contact with either the bottom of the chamber 54 at location 58 or elements E in the chamber 54. Preferably cover 62 is secured to a rod 66 (Fig. 1) that in turn is secured via connector means 67 to handle 36. Referring to Figs. 2 and 4—6, connector means 67 comprises crank 72 having an end 70 joined to rod 66 by means of a pin 68. Crank 72 is J-shaped, having a mid-portion 74 journalled in frame 22 and a leg 78 which includes an end 76 connected to a link 80 that reciprocates vertically relative to the frame 22. Link 80 has one end 82 connected to crank 72 and an opposite end 84 which rides on a camming bar 86; camming bar 86 has a camming surface 90 formed on one end 88 (Figs. 4 and 6). Link 80 is confined to generally vertical movement by a link arm 91 mounted on frame 22 (Figs. 4 and 5). Bar 86 is connected to handle 36 adjacent end 92 (Fig. 6), and the entire bar 86 slides, in the directions of arrows 94, within a V-shaped groove 96 of the frame 22. A rod 98 connected to handle 36 is guided between two plates 100 for rotational stability.

Optionally, pusher finger 34 is mounted to rotate, in the direction of arrow 102, on rod 98, with a torsion spring (not shown) biasing the finger 34 in a direction opposite to that of arrow 102. A cam surface 104 on finger 34 permits elements E, inserted by an auxiliary means (not shown), to override the spring bias on finger 34.

Preferably, cover 62 is given sufficient weight to serve as means for urging elements E through the chamber 54. That is, when shaped as a platen, cover 62 serves to prevent elements E from lodging against the walls 52. However, the urging capability of cover 62 is not needed if the spacing between walls 52 is enlarged to prevent accidental lodging of elements E.

In an alternate embodiment (not shown) cover 62 is omitted entirely, for example, in those analyzers that test for only those analytes that do not generate a gas as the detectable reagent and do not require a thermal cover. Also, if test elements E are being processed through analyzer 20 at the maximum rate, the uppermost test element E remains uncovered for a relative small portion of the total time in incubator 50.

Radiometer 110 is disposed at or adjacent to location 58, to read the bottommost element E in the chamber 54. Useful radiometers include colorimetric and fluorimetric radiometers such as are conventional in the art. A preferred form is a reflectometer comprising a light source 112 located below the level of platform 32 (Fig. 1) and aligned at 45° to axis 60 to send a light beam 114, via radiation guide means in the form of a lens 115, through passageway 113 (Fig. 3) to the viewing window 18 of the bottommost element E. A diffraction grating 116 (Fig. 1), adapted to produce a spectrum of from about 340 to about 700 nm, is disposed in the path of reflected beam 120, and photodiodes or detectors 118 each are positioned to detect a particular wavelength of spectral beams 119, passed through a lens (not shown), as is conventional. The diffuse component of the reflected beam 120 is collected via a lens 122 (Fig. 1) in a passageway 121 (Fig. 3) aligned with axis 60. Grating 116 is preferably telecentrically located, i.e., at the focal point, of lens 122. The signals generated by detectors 118 are converted, by means of a conventional computer (not shown), for example a microcomputer, to a concentration value based upon calibration values that have been manually keyed into the computer. Optionally, the computer also includes a timing device (not shown) that computes how long each test element is incubated prior to initiating the reading cycle.

Other radiometers are useful with the incubator described above. As one alternative (not shown) the plane defined by light beams 114 and 120 can be perpendicular to the plane defined by the spectral beams 119, with source 112 disposed under a surface 133 as discussed below.

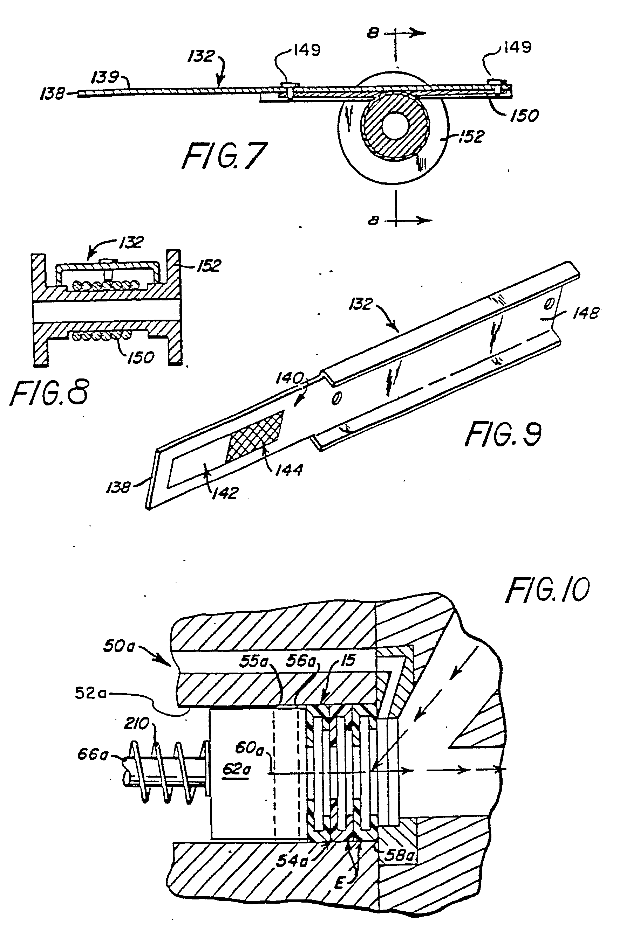

To sequentially unload incubator 50 on a first-in, first-out basis, unloading means 130 comprises an ejector element 132 disposed at location 58 of chamber 54 to remove the bottommost element E from the stack; element E is moved out through aperture 136 and across support surface 133 in the direction of arrow 134. (See Figs. 2 and 4.) Element 132 is an elongated blade having a pusher end 138, a top surface 139 and undersurface 140 (Figs. 7—9). The portion of undersurface 140 adjacent to end 138 is preferably provided with a white reference coating or standard surface 142 and a dark reference coating on surface 144, to calibrate the analyzer. Alternatively, a dark reference reading is obtainable by using a shutter (not shown) or by extinguishing the light source, and the white reference reading is obtainable by a feed-back diode (not shown) that monitors or controls the intensity of source 112.

A portion 148 of element 132 that is distal to end 138 is secured by fasteners 149 to a cable 150 that is wound upon a spool 152 (Fig. 8). Rotation of the spool 152 serves to reciprocate ejector element 132 in the direction of arrows 154 (Fig. 1), as directed by a reversible motor 156. One or more sensors 158, conventional opto-electric switches that cooperate with angle members 160, serve to control operation of the motor 156. For more accurate control over the extent of travel of ejector element 132, for example as is desirable when radiometer 110 is located to read elements E outside of the incubator as described hereinafter, a stepper motor (not shown) is provided in place of motor 156, which can be operatively connected to element 132 by a rack and pinion (not shown), wherein the rack is on the element 132.

Alternatively, end 138 of ejector element 132 can be bifurcated (not shown) so that it bears only on the edges of the test elements E.

The dimensions for the parts described are not critical and depend upon several factors, of which the test element dimensions are a major factor. For example, for test elements E that are about 24 mm by 28 mm, the walls 52 are set apart a distance that provides about 0.25 mm total clearance of the test elements for each of the single side edges 23 and 21 of the elements, to permit the sliding fit of the elements transverse to the longitudinal axis of the incubator. Alternatively, other sizes and/or shapes for the test elements E dictate appropriate alterations in the size or shape of the chamber.

Regardless of the size of the test elements, for proper alignment of the viewing area of the element with the radiometer 110 at location 58 of the incubator, the outside dimensions of the test element preferably are maintained with close tolerances, i.e., no greater than ±0.25 mm. Alternatively, one of the side walls 52 of incubator 50, and preferably the side wall 52 closest to unloading means 130 (Fig. 4) is used as a reference surface against which the test elements are biased when they reach location 58 of the incubator. To so bias the test elements, preferably the top surface 139 (Fig. 7) of ejector element 132 is provided with a friction material (not shown) that engages the next test element E to be viewed as the ejector element 132 is being withdrawn from the incubator 50 prior to the next reading by the radiometer 110. The friction material serves to pull the test element E up against the wall 52 closest to unloading means 130. Small pads of urethane are representative of useful friction materials.

If such friction material is used, the ejector element 132 is preferably fully extended into the incubator 50 when the first test element E is inserted into the incubator 50. The test element E also is preferably biased by a movable finger (not shown) in the orthogonal direction against one of the walls 52 (Fig. 3) that is perpendicular to wall 52 closest to unloading means 130. Such finger is linked to the movement of ejector element 132 so as to clear chamber 54 when the unloading means is activated.

The operation of the analyzer will be readily apparent from the preceding discussion. A test element E is deposited on platform 32 where it is preheated and spotted with a drop of liquid at the metering station 40. Any size drop is useful, although it has been found that for the test elements E of the type described, 10 μl is a preferred volume. Following the metering operation, the operator pushes handle 36 towards incubator 50, causing pusher finger 34 to move element E towards chamber 54. At the same time, camming bar 86 causes link 80 to move rod 66 upwardly, moving cover 62 upwardly in chamber 54. Element E is thus placed into the chamber 54, and the return of handle 36 to its initial position causes bar 86 to release link 80 and cover 62 falls onto the element E at location 58 of chamber 54. A period of incubation follows, during which the colour density or other response, e.g., fluorimetric response, develops. During this time, additional elements E can be spotted with liquid and sequentially placed into chamber 54 in like manner. Any gas that might otherwise evolve from portion 14 of element E is trapped and confined by the covering relationship of the test element E above it, or by cover 62 on the uppermost element E. The resulting pressure tends to retain the gas within the test element E. Eventually, and in the same sequence in which the test elements E are spotted, the elements E are read by radiometer 110 and the signals are converted to a concentration. After detection by the radiometer 110, the elements E are ejected or removed by ejector element 132. Each time ejector element 132 is activated to remove a test element E, coating 142 and then coating 144, if present, are read by the radiometer 110 to maintain proper calibration of the analyzer 20.

Optionally, incubator 50 includes temperature control means for maintaining walls 52 at a constant, predetermined, elevated temperature, for example, 37°C. A variety of conventional heating techniques are useful. For example, electrical elements 169 (Fig. 3) are mountable within or in contact with walls 52. In such an embodiment, cover 62 is preferably a conductive metal so as to be passively heated by walls 52 or actively heated by electrical elements mounted therein. Such temperature control means are preferred when the detected analyte is markedly variable with temperature, for example, when the analyte is an enzyme.

An additional optional feature is a nozzle 170 (Fig. 3) mounted at location 58 for directing an air stream in the direction of arrows 172 along the support surface 19 of the bottommost test element E. Such a stream removes any moisture that might condense on the support surface 19 as a result of evolved water vapour. Nozzle 170 is supplied, for example, with air via a passageway 174 fed from the heated portions of walls 52. A transparent plate 178 is disposed far enough away from the support surfaces of elements E so that a Coanda air flow effect is created as the air stream attaches to the test element E being viewed.

Fig. 10, an alternative embodiment is shown in which the incubator comprises a chamber orientated horizontally, rather than vertically as in the previous embodiment. Parts in the alternative embodiment, which are similar to those in the previously-described embodiment, bear the same reference numerals to which a distinguishing suffix "a" is attached. Thus, there is shown an incubator 50a having walls 52a which form an elongated chamber 54a having a longitudinal axis 60a, and an element reading location 58a. Test elements E are each inserted into chamber 54a in contact with the next adjacent element E, with frame members 15 extending generally transverse to axis 60a. However, the elements E are now inserted through a vertical aperture 55a, and are maintained generally vertical as they move from location 56a to location 58a. The means urging the elements to move in this fashion is a cover 62a on a rod 66a biased by a spring 210 to move the cover 62a towards location 58a. Rod 66a is caused to reciprocate in cooperation with the loading means in the same manner as described for the previous embodiment. Ejection of elements E after detection occurs as described above.

The parts of the incubator and other described components are of metallic or plastics material as determined by conventional design considerations. If walls 52 and portion 212 at location 25 (Fig. 3) are to be heated, then preferably they are metallic, for example copper, whereas the portion defining passageways 113 and 121 are preferably of plastics material to prevent heat loss.

In yet another embodiment (not shown) the radiometer is disposed to operate outside of the incubator to detect, from below support surface 133, the response of each slide separately after it is ejected from the incubator. Such an arrangement of the detecting means is particularly preferred for test elements that are so transparent as to allow the adjacent elements to be sensed if the radiometer is located at the bottom of the incubator as previously described. In such an embodiment, a backing surface (not shown) is disposed above the support surface, and the surface preferably includes a white reference coating that is scanned when a test element is not present. The radiometer, disposed to operate outside of the incubator chamber 54, directs a light beam up to the readable support portion of the element, at window 18, as the element is ejected in the direction of arrow 134.

The advantages of the analyzer of the present invention will be readily apparent from the preceding discussion. Time-independent access of test elements is possible with a rapid throughput. No motor, gears, controls or rotation-permitting heating controls are necessary for the incubator itself, because the incubator is stationary rather than rotating. No addressing or computer tracking of addresses is necessary for proper retrieval of the elements in the incubator other than the conventional indexing device described above. Because no space is required between test elements, the size of the incubator is reduced to a minimum. Finally, control of evolved gases is provided by the arrangement of the test elements themselves, eliminating the need for special parts in the incubator chamber. The result is an analyzer that is particularly useful at, e.g., a doctor's office.

## Claims

1. A method of detecting analytes of sample liquids by the generation of detectable responses in test elements each of which contains a sample-containing portion, the method comprising the steps of
metering a predetermined quantity of liquid onto the sample-containing portion in each of said elements,
incubating the elements while in a stacked configuration wherein each successive element is in contact with the element that precedes it so that such successive element covers the sample-containing portion of the preceding element in a manner sufficient to trap and confine to that preceding element any evolving gas from such preceding test element,
detecting the responses of each of said elements in the same sequence as they are placed in said configuration, and
removing said test elements from said configuration either before or after said detecting step.

2. A method according to claim 1, wherein each successive element is urged into contact with the preceding element.

3. A method according to claim 1 or 2, in which the configuration of said incubating step is a vertical stack.

4. A method according to claim 1 or 2, in which the configuration of said incubating step is disposed horizontally.

5. Apparatus for detecting analytes of sample liquids by the generation of detectable responses in test elements (E) each of which contains a sample-containing portion (14), the apparatus comprising an incubator (50) which is arranged to receive a plurality of said test elements (E), each of which has received a predetermined metered quantity of liquid onto the sample-containing portion (14) thereof, and contain said elements (E) in a stacked configuration wherein each successive element (E) is in contact with the element (E) that precedes it so that such successive element (E) covers the sample-containing portion (14) of the preceding element (E) in a manner sufficient to trap and confine to that preceding element (E) any evolving gas from such preceding element (E), means (110) for detecting the responses of each of said elements (E) in the same sequence as they are placed in said configuration, and means (132) for removing said elements (E) from said configuration either before or after said detecting step.

### Patentansprüche

1. Verfahren zum Bestimmen von Analyten von Probenflüssigkeiten durch Erzeugen feststellbarer Reaktionen in Testelementen, von denen jedes einen Probenflüssigkeit enthaltenden Teil aufweist, wobei das Verfahren folgende Schritte umfaßt:

Aufbringen einer vorbestimmten, genau dosierten Flüssigkeitsmenge auf den Probenflüssigkeit enthaltenden Teil eines jeden Testelements,

Inkubation der Elemente in einer stapelförmigen Anordnung, in der jeweils ein nachfolgendes Element mit einem vorausgehenden Element so in Berührung steht, daß das nachfolgende Element den Probenflüssigkeit enthaltenden Teil des vorausgehenden Elements soweit abdeckt, daß kein in dem vorausgehenden Testelement entstehendes Gas aus diesem entweichen kann,

Feststellung der Reaktion der Elemente in der Reihenfolge, in der sie in der Anordnung plaziert sind, und

Entfernen der Testelemente aus der Anordnung, bevor oder nachdem die Feststellung erfolgt ist.

2. Verfahren nach Anspruch 1, dadurch gekennzeichnet, daß jedes nachfolgende Element unter Druck mit dem vorausgehenden Element in Berührung gebracht wird.

3. Verfahren nach Anspruch 1 oder 2, dadurch gekennzeichnet, daß die Testelemente bei der Inkubation in einem vertikalen Stapel angeordnet sind.

4. Verfahren nach Anspruch 1 oder 2, dadurch gekennzeichnet, daß die Testelemente bei der Inkubation waagerecht angeordnet sind.

5. Vorrichtung zum Bestimmen von Analyten von Probenflüssigkeiten durch Erzeugen feststellbarer Reaktionen in Testelementen (E), von denen jedes einen Probenflüssigkeit enthaltenden Teil (14) aufweist, mit einem Inkubator (50), der so angeordnet ist, daß er mehrere Testelemente (E) aufnehmen kann, auf deren Probenflüssigkeit enthaltenden Teil (14) jeweils eine vorbestimmte, genau dosierte Flüssigkeitsmenge aufgebracht worden ist, und der die Elemente (E) in einer stapelförmigen Anordnung enthält, in der jeweils ein nachfolgendes Element (E) mit dem ihm vorausgehenden Element (E) so in Berührung steht, daß es den Probenflüssigkeit enthaltenden Teil (14) des vorausgehenden Elements (E) soweit abdeckt, daß kein in dem vorausgehenden Element (E) entstehendes Gas aus diesem entweichen kann, mit Mitteln (110) zur Feststellung der Reaktion eines jeden der Elemente (E) in der Reihenfolge, in der diese in der Anordnung plaziert sind, und mit Mitteln (132) zum Entfernen der Elemente (E) aus der Anordnung, bevor oder nachdem die Feststellung erfolgt ist.

### Revendications

1. Procédé de détection d'analytes de liquides échantillons en créant des réponses détectables dans des plaquettes d'analyse qui chacune présentent une partie où on dépose de l'échantillon, le procédé étant caractérisé par les étapes de:

dosage d'une quantité prédéterminée de liquide sur la partie pour échantillon de chacune de ces plaquettes,

incubation des plaquettes alors qu'elles sont dans une configuration empilée où chaque plaquette successive est au contact de la plaquette qui la précède afin que chaque plaquette consécutive couvre la partie pour échantillon de la plaquette qui la précède d'une manière suffisante pour emprisonner et confiner à cette plaquette précédente tout dégagement de gaz d'une telle plaquette d'analyse précédente,

détection des réponses de chacune de ces plaquettes suivant la même séquence que celle où elles sont placées dans cette configuration,

et retrait de ces plaquettes d'analyse de cette configuration soit avant soit après cette étape de détection.

2. Procédé conforme à la revendication 1 où chaque plaquette successive est appliquée au contact de la plaquette précédente.

3. Procédé conforme à la revendication 1 ou 2 où cette configuration lors de cette étape d'incubation est une pile verticale.

4. Procédé conforme à la revendication 1 ou 2 dans lequel la configuration lors de cette étape d'incubation est disposée horizontalement.

5. Appareil pour détecter des analytes de liquides échantillons par la création de réponses détectables dans des plaquettes d'analyse (E) qui présentent chacune une partie (14) pour contenir de l'échantillon, cet appareil comprenant un incubateur (50) qui est conçu pour recevoir une série de ces plaquettes d'analyse (E) qui ont reçu chacune une quantité dosée prédéterminée de liquide sur leurs parties (14) et qui contient ces plaquettes (E) en une configuration empilée où chaque plaquette (E) successive est au contact de la plaquette (E) qui la précède de telle manière que chaque plaquette consécutive (E) couvre la partie (14) pour échantillon de la plaquette précédente (E) d'une manière suffisante pour emprisonner et confiner à cette plaquette précédente (E) tout dégagement de gaz de cette plaquette précédente (E), des moyens (110) pour détecter les réponses de chacune des plaquettes

(E) selon la même séquence que celle où elles sont placées dans cette configuration, et des moyens (132) pour retirer ces plaquettes (E) de cette configuration soit avant soit après l'étape de détection.

FIG. I

FIG.2

FIG.3

FIG. 4

FIG. 5

FIG. 6

FIG.7

FIG.8

FIG.9

FIG.10